# EUROPEAN PATENT SPECIFICATION

(11) **EP 3 235 694 B1**
(45) Date of publication and mention of the grant of the patent: **21.08.2019**
(21) Application number: 15869643.5
(22) Date of filing: 16.10.2015
(51) Int. Cl.: B60R 22/46, B60R 22/48

(54) **SEAT BELT RETRACTOR AND SEAT BELT**
SICHERHEITSGURTAUFROLLER UND SICHERHEITSGURT
DISPOSITIF DE RÉTRACTION DE CEINTURE DE SÉCURITÉ, ET CEINTURE DE SÉCURITÉ

(30) Priority: 19.12.2014 JP 2014257801
(43) Date of publication of application: 25.10.2017
(73) Proprietor: Joyson Safety Systems Japan K.K., Shinagawa-ku Tokyo (JP)
(72) Inventor: TAKAO, Masato, Shiga 5291388 (JP); TOMBE, Hideyuki, Shiga 5291388 (JP)
(74) Representative: Banzer, Hans-Jörg
(86) International application number: PCT/JP2015/079301
(87) International publication number: WO 2016/098435

(56) References cited:
- EP-A1- 1 498 325
- EP-A1- 1 894 794
- JP-A- 2005 035 485
- US-A1- 2006 072 911
- US-A1- 2008 221 758

## Description

### [Technical Field]

The present invention relates to seatbelt winding apparatuses and seatbelt apparatuses.

### [Background Art]

Conventionally, there has been a seatbelt winding apparatus, which applies high current for winding up a seatbelt to a motor, in a case where there is a possibility of collision, etc., and then continues applying a sustaining current that is high enough to prevent tension of the seatbelt from being slack (see, for example, Japanese Unexamined Patent Application Publication No. 2003-312443 or EP1498325A).

### [Summary of Invention]

### [Technical Problem]

However, in a situation where deceleration of a vehicle is relatively low (for example, when a vehicle is slipping, etc.), there is a case that a motor, etc., produces heat because the sustaining current, which is high enough to prevent tension of a seatbelt from being slack, may be applied for a long period of time.

Therefore, one object of the present invention is to provide a seatbelt winding apparatus and a seatbelt apparatus that is capable of preventing heat of a motor, etc.

### [Solution to Problem]

One proposal is to provide a seatbelt winding apparatus including: a motor; and a control device configured to generate a flow of motor current in a winding-current direction that drives the motor to generate force to wind up a seatbelt, and configured to lower a current value of the motor current flowing in the winding-current direction from a first current value to a second current value, the first current value being required to wind up the seatbelt and the second current value being required to sustain tension of the seatbelt. The control device measures a current-conducting duration during which the motor current flows in the winding-current direction, and, upon the current-conducting duration having attained a set time, the control device further lowers the current value of the motor current flowing in the winding-current direction from the second current value to a third current value that is required to sustain tension of the seatbelt.

### [Advantageous Effects of Invention]

According to an embodiment, heat of a motor, etc., may be prevented.

### [Brief Description of Drawings]

FIG. 1 is a configuration diagram illustrating an example of a seatbelt apparatus;
FIG. 2 is a waveform diagram illustrating an example of changing a current value of a motor current;
FIG. 3 is a waveform diagram illustrating an example of changing a current value of the motor current;
FIG. 4 is a waveform diagram illustrating an example of changing a current value of the motor current; and
FIG. 5 is a waveform diagram illustrating an example of changing a current value of the motor current.

### [Description of Embodiments]

The following description explains embodiments of the present invention, with reference to drawings.

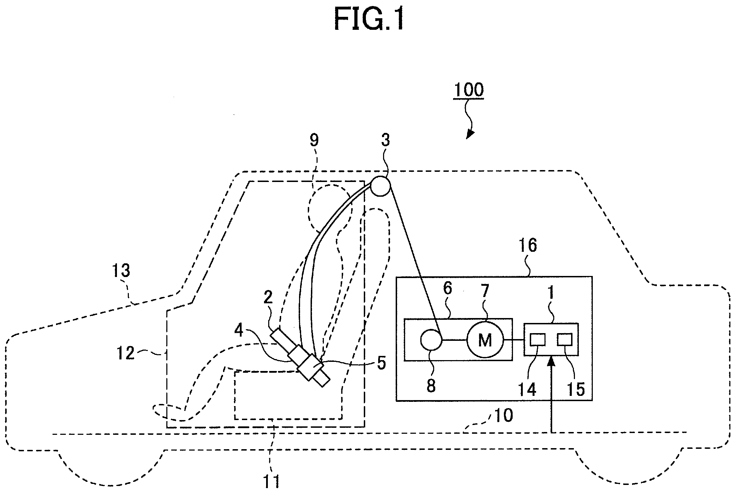

FIG. 1 is a configuration diagram schematically illustrating an example of a seatbelt apparatus 100. The seatbelt apparatus 100 is mounted on a vehicle 13 such as a car. The seatbelt apparatus 100 includes, for example, a seatbelt 2, a seatbelt winding apparatus 16, a shoulder anchor 3, a tongue 4, and a buckle 5. The seatbelt winding apparatus 16 includes a retractor 6 and a control device 1. The vehicle 13 is provided with an openable and closable door 12. For example, the door 12 is for a user 9 to get on and off the vehicle 13.

The seatbelt 2 is an example of a belt-shaped member for restraining the user 9 sitting on a seat 11 of the vehicle 13. The seatbelt 2 is wound up by the retractor 6 and can be pulled out from the retractor 6. An end of the seatbelt 2 is connected to the retractor 6, and the other end of the seatbelt 2 is fixed to the car body, a pretensioner device, or the seat 11. Seatbelts are also called webbings.

The retractor 6 is an example of a winding device for enabling winding up and pulling out the seatbelt 2. For example, the retractor 6 is fixed to the car body in a close distance from the seat 11. The retractor 6 restricts the seatbelt 2 not to be pulled out from the retractor 6, for example, at an emergency where deceleration that is equal to or greater than a predetermined value is imposed or is likely to be imposed on the vehicle 13. The retractor 6 may perform an action of winding up the seatbelt 2 at a time where deceleration that is equal to or greater than a predetermined value is imposed or is likely to be imposed on the vehicle 13, in order to remove slack in the seatbelt 2 or to sustain a posture of the user 9.

An emergency where deceleration that is equal to or greater than a predetermined value is imposed on the vehicle 13 is, for example, a time of activating a sudden brake, to decelerate the vehicle 13 at deceleration that is equal to or greater than a predetermined value through an automatic braking operation or a manual braking operation of a driver, and a time of activating an automatic brake, to automatically decelerate the vehicle 13 at deceleration that is equal to or greater than a predetermined value without a braking operation of a driver. Examples of an emergency where deceleration that is equal to or greater than a predetermined value is likely to be imposed on the vehicle 13 include a time of determining that there is a probability of the vehicle 13 colliding.

The retractor 6 includes, for example, a belt-reel 8 and a motor 7, which winds up the seatbelt 2 using the belt-reel 8. For example, the motor 7 positively rotates the belt-reel 8 in a winding direction to wind up the seatbelt 2 into the belt-reel 8 of the retractor 6, and rotates the belt-reel 8 in the opposite direction of the winding direction (i.e. reverse rotation), so as to release connection of the belt-reel 8 and the motor 7.

By use of the motor 7, which can adjust the length of the seatbelt 2 to wind up, the retractor 6 is capable of, for example, properly reducing slack in the seatbelt 2. Furthermore, by use of the motor 7, which can wind up the seatbelt 2, the retractor 6 is capable of, for example, automatically housing the seatbelt 2 in the retractor 6 and assisting the user 9 to manually house the seatbelt 2 in the retractor 6 by hand.

The shoulder anchor 3 is an example of a guide member for guiding the seatbelt 2 pulled out from the retractor 6 towards the shoulder of a passenger.

The tongue 4 is an example of a slidable member attached to the seatbelt 2, which is guided by the shoulder anchor 3.

The buckle 5 is an example of an engaging member, to which the tongue 4 is attachable and detachable. For example, the buckle 5 is fixed to the floor of the car body or to the seat 11.

When the seatbelt 2 is not fastened for a passenger, i.e., in an unfastened state, the tongue 4 is not engaged with the buckle 5 and the entire length of the seatbelt 2 (specifically, the length of the seatbelt 2 that can be naturally wound up by the retractor 6) is wound up by the retractor 6. Contrarily, when the seatbelt 2 is fastened for a passenger, i.e., in a fastened state, the seatbelt 2 is pulled out from the retractor 6, as illustrated in FIG. 1. Further, the tongue 4 is engaged with the buckle 5, and the seatbelt 2 is wound up by the retractor 6 to reduce slack in the seatbelt 2, such that the seatbelt 2 is fastened for the passenger.

When the tongue 4 is engaged with the buckle 5, i.e., when the seatbelt 2 is fastened for a passenger, the seatbelt 2 can be freely pulled out in a normal pullout speed, as far as being in an ordinary state where deceleration that is equal to or greater than a predetermined value is not imposed on the vehicle 13. In addition, when the seatbelt 2 is released from a force for pulling out that is imposed in a direction of pulling out, unnecessary length of the pulled-out seatbelt 2 is wound up by the retractor 6.

In an emergency where deceleration that is equal to or greater than a predetermined value is imposed or is likely to be imposed on the vehicle 13 when the tongue 4 is engaged with the buckle 5, i.e., when the seatbelt 2 is fastened for a passenger, the retractor 6 locks up or winds up the seatbelt 2 to restrict the seatbelt 2 not to be pulled out from the retractor 6, in order to strengthen restraining power of the seatbelt 2 upon the passenger.

The control device 1 is an example of a computer device for controlling the winding action of the retractor 6 to wind up the seatbelt 2 by use of the motor 7, for example, by applying a motor current to the motor 7 so as to drive the motor 7 of the retractor 6. Examples of the control device 1 include an electric control unit (what is called an engine control unit (ECU)) for controlling a seatbelt, etc.

The control device 1 includes a control-circuit 15 that obtains a signal indicating a state of the vehicle 13, from at least one of another computer device, a sensor, and a switch, which are mounted on the vehicle 13, via a signal line 10. Examples of the signal line 10 include a wire harness that conveys a signal indicative of a high-level or a low-level, and a communication line that conveys data in a predetermined communication standard, such as a controller area network (CAN). Examples of the control-circuit 15 include a microcomputer provided with a central processing unit (CPU), a processor, etc. Examples of a signal indicating a state of the vehicle 13 include a vehicle-speed signal that indicates a state of speed of the vehicle 13, a brake-activating signal that is indicative of an activation of a sudden brake or an automatic brake of the vehicle 13, a collision-predicting signal that indicates that there is a possibility of collision of the vehicle 13, etc.

The brake-activating signal that is indicative of an activation of a sudden brake or an automatic brake of the vehicle 13 is output, for example, from a braking-control device that controls braking of the vehicle 13. The collision-predicting signal that indicates that there is a possibility of collision of the vehicle 13 is output, for example, from a collision-predicting device that predicts collision of the vehicle 13. For example, the braking-control device that controls braking of the vehicle 13 may activate an automatic brake of the vehicle 13 upon detection of a collision-predicting signal, and then generate/output a brake-activating signal that is indicative of an activation of an automatic brake of the vehicle 13.

The control device 1 includes a drive-circuit 14 that applies, to the motor 7, a motor current (hereinafter referred to as a "motor current I" as well) for driving the motor 7. The drive-circuit 14 adjusts a current direction and an amount of the motor current I, based on a driving signal (e.g. a driving signal of pulse-width modulation) provided from the control-circuit 15. Examples of the drive-circuit 14 include an H-bridge circuit having four switching elements, etc.

For example, the drive-circuit 14 of the control device 1 causes the motor current I to flow in a winding-current direction (hereinafter referred to as a "winding direction D1" as well), so as to drive the motor 7 to generate force to wind up the seatbelt 2 by use of the belt-reel 8 of the retractor 6, in order to wind up the seatbelt 2. Contrarily, for example, the drive-circuit 14 of the control device 1 causes the motor current I to flow in an opposite direction of the winding direction D1 (hereinafter referred to as a "reverse direction D2" as well), so as to release the connection of the belt-reel 8 and the motor 7.

For example, upon detecting a brake-activating signal that is indicative of an activation of a sudden brake or an automatic brake of the vehicle 13, the control-circuit 15 of the control device 1 operates the drive-circuit 14 of the control device 1 to cause the motor current I to start flowing in the winding direction D1. For example, upon detecting a collision-predicting signal that indicates that there is a possibility of collision of the vehicle 13, the control-circuit 15 of the control device 1 may operate the drive-circuit 14 of the control device 1 to cause the motor current I to start flowing in the winding direction D1. As described above, for example, upon detecting at least one of a brake-activating signal that is indicative of an activation of a sudden brake or an automatic brake and a collision-predicting signal that indicates that there is a possibility of collision, the drive-circuit 14 of the control device 1 causes the motor current I to start flowing in the winding direction D1.

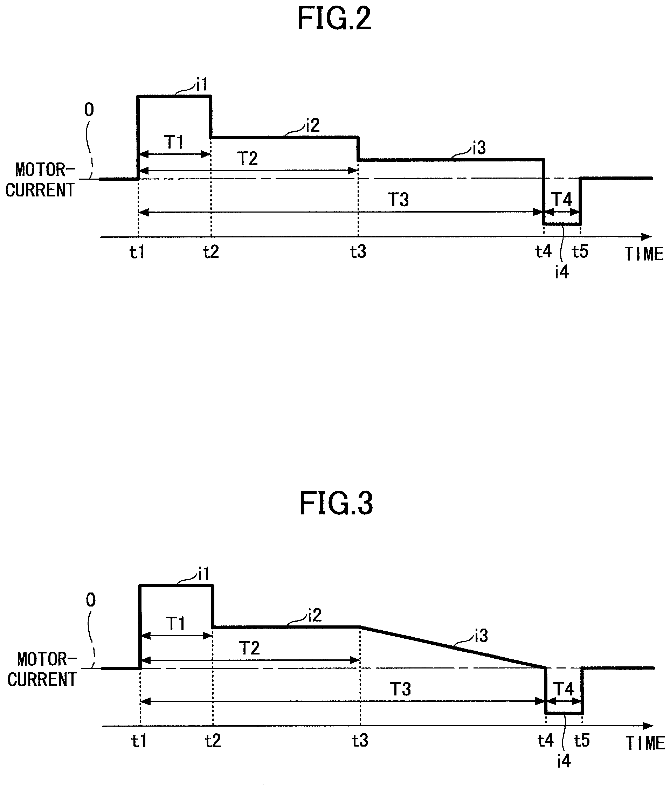

FIG. 2 is a waveform diagram illustrating an example of changing a current value of the motor current I. In FIG. 2, magnitude of the motor current I is indicated by an arbitrary unit along the vertical axis, and time is indicated by a given unit along the horizontal axis. In FIG. 2, a positive value is indicative of a current value of the motor current I that flows in the winding direction D1; a negative value is indicative of a current value of the motor current I that flows in the reverse direction D2; and 0 is indicative of a state where the motor current I does not flow either in the winding direction D1 or in the reverse direction D2.

A winding current i1 is indicative of the motor current I in a first current value, which is required to wind up the seatbelt 2. A first sustaining current i2 is indicative of the motor current I in a second current value, which is required to sustain tension of the seatbelt 2. A second sustaining current i3 is indicative of the motor current I in a third current value, which is required to sustain tension of the seatbelt 2. The third current value is lower than the second current value, and the second current value is lower than the first current value. Each of the winding current i1, the first sustaining current i2, and the second sustaining current i3 is the motor current I that flows in the winding direction D1. The first sustaining current i2 is a constant current having a constant second current value. A releasing current i4 is indicative of the motor current I in a fourth current value, which is required to release tension of the seatbelt 2 caused by the motor 7 through a clutch of the retractor 6. The releasing current i4 is indicative of the motor current I that flows in the reverse direction D2. In later-described FIGS. 3 through 5, currents expressed by the reference signs i1 through i4 and the relations of the currents with the reference signs i1 through i4 are the same as in FIG. 2.

For example, in a case of detecting a brake-activating signal that is indicative of an activation of a sudden brake or an automatic brake at a timing t1, the control-circuit 15 operates the drive-circuit 14 to raise a current value of the motor current I that flows in the winding direction D1 to the first current value, which is required to wind up the seatbelt 2. For example, in a case of detecting a collision-predicting signal that indicates that there is a possibility of collision of the vehicle 13 at the timing t1, the control-circuit 15 may operate the drive-circuit 14 to raise a current value of the motor current I that flows in the winding direction D1 to the first current value, which is required to wind up the seatbelt 2. The first current value may or may not be a constant value. The drive-circuit 14 applies the motor current I at the first current value (i.e. the winding current i1) for a winding time T1.

The winding time T1 is, for example, an elapsed time from the timing t1 to the timing t2. The winding time T1 may be a preset fixed time and may be a variable time until a detection that tension of the seatbelt 2 is equal to or more than a predetermined value.

For example, after the winding time T1 passes, the control-circuit 15 of the control device 1 operates the drive-circuit 14 to lower the current value of the motor current I that flows in the winding direction D1 from the first current value, which is required to wind up the seatbelt 2, to the second current value, which is required to sustain tension of the seatbelt 2. In other words, the control-circuit 15 operates the drive-circuit 14 to change the motor current I from the winding current i1 to the first sustaining current i2.

The control-circuit 15 of the control device 1 is provided with, for example, a counter or a counter-function for counting a current-conducting duration (hereinafter referred to as a "current-conducting duration Tc" as well) during which the motor current I flows in the winding direction D1. For example, the current-conducting duration Tc is an elapsed time from the timing t1, at which the motor current I starts to flow in the winding direction D1. By means of the counter or the counter-function, the control-circuit 15 is capable of precisely counting the current-conducting duration Tc from when the motor current I starts to flow in the winding direction D1. The counter or the counter-function of the control-circuit 15 is an example of a measurement-unit (or a measurement-function) for measuring the current-conducting duration Tc, based on, for example, time information that is obtained by the control device 1.

For example, the control-circuit 15 may start counting the current-conducting duration Tc upon detecting an activation of a sudden brake or an automatic brake of the vehicle 13, based on a brake-activating signal that is indicative of an activation of a sudden brake or an automatic brake of the vehicle 13. In this case, the control-circuit 15 is capable of precisely counting the current-conducting duration Tc from when the motor current I starts to flow in the winding direction D1 in response to an activation of a sudden brake or an automatic brake.

For example, the control-circuit 15 may start counting the current-conducting duration Tc upon detecting a possibility of collision of the vehicle 13, based on a collision-predicting signal that indicates that there is a possibility of collision of the vehicle 13. In one embodiment, a sudden brake or an automatic brake of the vehicle 13 is activated in response to a collision-predicting signal. In this embodiment, also for the case of the control-circuit 15 starting counting of the current-conducting duration Tc in response to a collision-predicting signal, the control-circuit 15 is capable of precisely counting the current-conducting duration Tc from when the motor current I starts to flow in the winding direction D1.

In a case of having detected a completion of a sudden brake or an automatic brake of the vehicle 13 after passing the winding time T1 and before the current-conducting duration Tc would have attained a set time T2, the control-circuit 15 promptly changes the motor current I from the first sustaining current i2, which flows in the winding direction D1, to the releasing current i4, which flows in the reverse direction D2, and then causes the releasing current i4 to flow for a releasing time T4. Then, after a completion of a sudden brake or an automatic brake, the user 9 is allowed to easily pull out the seatbelt 2 from the retractor 6.

Contrarily, in a case of not having detected a completion of a sudden brake or an automatic brake of the vehicle 13 after passing the winding time T1 and before the current-conducting duration Tc would have attained the set time T2, the control-circuit 15 further lowers a current value of the motor current I, which flows in the winding direction D1, from the second current value. In other words, the control-circuit 15 operates the drive-circuit 14 to change the motor current I from the first sustaining current i2 to second sustaining current i3 at a timing t3 prior to changing the motor current I to the releasing current i4.

In a case where the current-conducting duration Tc has attained the set time T2, the control-circuit 15 estimates that the vehicle 13 is in a situation where deceleration that should be generated for the vehicle 13 by sudden braking, etc., under normal circumstances is not actually generated to the expected degree, due to a slip, etc. Therefore, for example, even in a case where the vehicle 13 is slipping, the control-circuit 15 is capable of preventing heat of the motor 7 and the drive-circuit 14, compared to a case where the motor current I in the second current value flows continuously, because the control-circuit 15 further lowers a current value of the motor current I, which flows in the winding direction D1, from the second current value. Furthermore, even without a sensor for detecting deceleration of the vehicle 13, the control-circuit 15 is capable of preventing heat of the motor 7 and the drive-circuit 14, because, in a case where the current-conducting duration Tc has attained the set time T2, the control-circuit 15 further lowers a current value of the motor current I, which flows in the winding direction D1, from the second current value.

For example, the control-circuit 15 of the control device 1 may adjust the length of the set time T2 in accordance with vehicle-speed at a moment of causing the motor current I to start flowing in the winding direction D1. Depending on vehicle-speed at a moment of activating a sudden brake or an automatic brake, a braking time Tb, which is from activating a sudden brake or an automatic brake to completing the sudden brake or automatic brake (i.e. until the vehicle 13 stops), varies. Furthermore, causing the motor current I to start flowing in the winding direction D1 and activating a sudden brake or an automatic brake are performed almost at the same timing (i.e. the timing tl). Therefore, the set time T2 may be adjusted to a suitable value, by adjusting the length of the set time T2 in accordance with vehicle-speed at a moment of causing the motor current I to start flowing in the winding direction D1.

For example, the control-circuit 15 sets the set time T2 to a theoretical value (or design value) of a braking time Tb, which is theoretically calculated in accordance with vehicle-speed of a moment of causing the motor current I to start flowing in the winding direction D1 (i.e. at a moment of activating a sudden brake or an automatic brake). Therefore, the control-circuit 15 is capable of precisely estimating whether or not the vehicle 13 is in a situation where deceleration that should be generated for the vehicle 13 by sudden braking, etc., under normal circumstances is not actually generated to the expected degree, due to a slip, etc.

Note that the control-circuit 15 of the control device 1 may adjust the length of the set time T2 in accordance with vehicle-speed at a moment of detecting a collision-predicting signal that indicates that there is a possibility of collision of the vehicle.

For example, the control-circuit 15 of the control device 1 operates the drive-circuit 14 to continue causing the motor current I to flow in the winding direction D1 until the current-conducting duration Tc has attained a second set time T3. The second set time T3 is longer than the first set time T2. Because of the second set time T3 during which tension of the seatbelt 2 is comparatively sustained, the seatbelt 2 is prevented from being pulled out by passenger inertia. Similarly to the set time T2, the control-circuit 15 of the control device 1 may adjust the length of the second set time T3, for example, in accordance with vehicle-speed at a moment of causing the motor current I to flow in the winding direction D1.

The control-circuit 15 of the control device 1 operates the drive-circuit 14 to maintain a current value of the motor current I, which flows in the winding direction D1, equal to or lower than the second current value, for example, until the current-conducting duration Tc has attained the second set time T3. Thus, the user 9 may feel less uncomfortable because significant change of tension of the seatbelt 2 is prevented, as the motor current I, which flows in the winding direction D1, is prevented from exceeding the second current value.

The control-circuit 15 of the control device 1 causes the releasing current i4 to flow for the releasing time T4 in a case where the current-conducting duration Tc has attained the second set time T3. Then, after a completion of a sudden brake or an automatic brake, the user 9 is allowed to easily pull out the seatbelt 2 from the retractor 6.

The control-circuit 15 of the control device 1 may operate the drive-circuit 14 to continue causing the second sustaining current i3 to flow, for example, until detecting a completion of a brake of the vehicle 13. In this case, because tension of the seatbelt 2 is comparatively sustained, the seatbelt 2 is prevented from being pulled out by passenger inertia.

The control-circuit 15 of the control device 1 may operate the drive-circuit 14 to maintain a current value of the motor current I, which flows in the winding direction D1, equal to or lower than the second current value, for example, until detecting a completion of a brake of the vehicle 13. In this case, the user 9 may feel less uncomfortable because significant change of tension of the seatbelt 2 is prevented, as the motor current I, which flows in the winding direction D1, is prevented from exceeding the second current value.

The control-circuit 15 of the control device 1 causes the releasing current i4 to flow for the releasing time T4, for example, upon detecting a completion of a braking action of the vehicle 13. Then, after a completion of a sudden brake or an automatic brake, the user 9 is allowed to easily pull out the seatbelt 2 from the retractor 6.

FIG. 3 is a waveform diagram illustrating an example of changing a current value of the motor current I. In FIG. 3, magnitude of the motor current I is indicated by a given unit along the vertical axis, and time is indicated by a given unit along the horizontal axis. The control-circuit 15 of the control device 1 may decrease a current value of the motor current I, which flows in the winding direction D1, gradually from the second current value that is required to sustain tension of the seatbelt 2. For example, as illustrated in FIG. 3, the control-circuit 15 changes from a first sustaining current i2, which is constant, to a second sustaining current i3, which is gradually decreased in a linear manner. Thus, the user 9 may feel less uncomfortable because force to sustain tension of the seatbelt 2 is reduced smoothly.

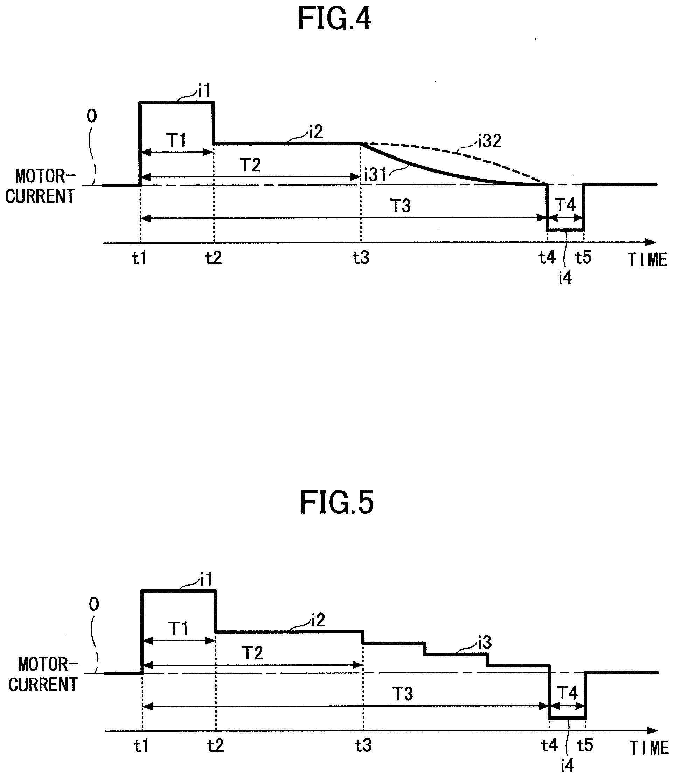

FIG. 4 is a waveform diagram illustrating an example of changing a current value of the motor current I. In FIG. 4, magnitude of the motor current I is indicated by a given unit along the vertical axis, and time is indicated by a given unit along the horizontal axis. The control-circuit 15 of the control device 1 may change from a first sustaining current i2, which is constant, to a second sustaining current i3, which is gradually decreased in a curve. In FIG. 4, the control-circuit 15 decreases either as a second sustaining current i31 or as a second sustaining current i32 gradually in a curve. The control-circuit 15 changes a first sustaining current i2, which is constant, into either a second sustaining current i31 or a second sustaining current i32. Thus, the user 9 may feel less uncomfortable because force to sustain tension of the seatbelt 2 is reduced smoothly.

FIG. 5 is a waveform diagram illustrating an example of changing a current value of the motor current I. In FIG. 5, magnitude of the motor current I is indicated by a given unit along the vertical axis, and time is indicated by a given unit along the horizontal axis. The control-circuit 15 of the control device 1 may change from a first sustaining current i2, which is constant, to a second sustaining current i3, which is gradually decreased step by step. In FIG. 5, the control-circuit 15 gradually decreases the second sustaining current i3 step by step. The control-circuit 15 changes from the first sustaining current i2, which is constant, to the second sustaining current i3, which is gradually decreased step by step. Thus, the user 9 may feel less uncomfortable because force to sustain tension of the seatbelt 2 is reduced smoothly.

Note that current value of the motor current I at timing t4 in each of the waveform diagrams of FIGS. 2 through 5 cannot be negative value.

According to an embodiment, heat of a motor, etc., can be prevented because, when a current-conducting duration has attained a set time, a current value of a motor current that flows in a winding-current direction is further lowered from a current value (i.e. a second current value) required to sustain tension of a seatbelt.

Although the above description explains a seatbelt winding apparatus and a seatbelt apparatus in embodiments, the present invention is not limited to the above embodiments. Variations and modifications, such as a combination or replacement of the embodiments with a part or the entirety of another embodiment, may be made without departing from the scope of the present invention.

### [Reference Signs List]

- 1: control device
- 2: seatbelt
- 3: shoulder anchor
- 4: tongue
- 5: buckle
- 6: retractor
- 7: motor
- 8: belt-reel
- 9: user
- 10: signal line
- 11: seat
- 12: door
- 13: vehicle
- 14: drive-circuit
- 15: control-circuit
- 16: seatbelt winding apparatus

## Claims

1. A seatbelt winding apparatus (16) comprising:
a motor (7); and
a control device (1) configured to generate a flow of motor current (I) in a winding-current direction (D1) that drives the motor (7) to generate force to wind up a seatbelt (2), and configured to lower a current value of the motor current (I) flowing in the winding-current direction (D1) from a first current value (i1) to a second current value (i2), the first current value (i1) being required to wind up the seatbelt (2) and the second current value (i2) being required to sustain tension of the seatbelt (2),
wherein the control device (1) measures a current-conducting duration (Tc) during which the motor current (I) flows in the winding-current direction (D1), and, upon the current-conducting duration (Tc) having attained a set time (T2), the control device (1) further lowers the current value of the motor current (I) flowing in the winding-current direction (D1) from the second current value (i2) to a third current value (i3, i31, i32) that is required to sustain tension of the seatbelt (2) .

2. The seatbelt winding apparatus (16) according to claim 1,
wherein the control device (1) measures the current-conducting duration (Tc) during which the motor current (I) flows in the winding-current direction (D1), and, in a case of not detecting a completion of a braking action of a vehicle (13) by a time when the current-conducting duration (Tc) has attained the set time (T2), the control device (1) further lowers the current value of the motor current (I) flowing in the winding-current direction (D1) from the second current value (i2).

3. The seatbelt winding apparatus (16) according to claim 1 or 2, wherein the control device (1) gradually lowers the current value of the motor current (I) flowing in the winding-current direction (D1) from the second current value (i2).

4. The seatbelt winding apparatus (16) according to any one of claims 1 through 3, wherein the current-conducting duration (Tc) is an elapsed time from when the motor current (I) starts flowing in the winding-current direction (D1).

5. The seatbelt winding apparatus (16) according to claim 4, wherein the control device (1) adjusts a length of the set time (T2) in accordance with vehicle-speed at a moment when the motor current (I) starts flowing in the winding-current direction (D1).

6. The seatbelt winding apparatus (16) according to any one of claims 1 through 5, wherein the control device (1) continues causing the motor current (I) to flow in the winding-current direction (D1) until the current-conducting duration (Tc) has attained a second set time (T3), which is longer than the set time (T2).

7. The seatbelt winding apparatus (16) according to claim 6, wherein the control device (1) maintains the current value of the motor current (I) flowing in the winding-current direction (D1) equal to or lower than the second current value (i2) until the current-conducting duration (Tc) has attained the second set time (T3), which is longer than the set time (T2).

8. The seatbelt winding apparatus (16) according to claim 6 or 7, wherein the control device (1) causes the motor current (I) to flow in a current-direction (D2) opposite to the winding-current direction (D1), upon the current-conducting duration (Tc) having attained the second set time (T3).

9. The seatbelt winding apparatus (16) according to any one of claims 1 through 5, wherein the control device (1) continues causing the motor current (I) to flow in the winding-current direction (D1) until detecting a completion of a braking action of the vehicle (13).

10. The seatbelt winding apparatus (16) according to any one of claims 1 through 5, wherein the control device (1) maintains the current value of the motor current (I) flowing in the winding-current direction (D1) equal to or lower than the second current value (i2) until detecting a completion of a braking action of the vehicle (13).

11. The seatbelt winding apparatus (16) according to claim 9 or 10, wherein the control device (1) causes the motor current (I) to flow in a current-direction (D2) opposite to the winding-current direction (D1), upon detecting the completion of the braking action.

12. A seatbelt apparatus (100) comprising:
the seatbelt winding apparatus (16) according to any one of claims 1 through 11;
the seatbelt (2);
a guide member configured to guide the seatbelt (2);
a tongue (4) to which the seatbelt (2) is attached; and
a buckle (5) to which the tongue (4) is attachable and detachable.

## Patentansprüche

1. Sitzgurt-Aufrollvorrichtung (16) umfassend:
einen Motor (7); und
eine Steuervorrichtung (1), welche konfiguriert ist, um einen Fluss eines Motorstroms (I) in einer Aufroll-Stromrichtung (D1) zu erzeugen, welcher den Motor (7) antreibt, um eine Kraft zu erzeugen, um einen Sitzgurt (2) aufzurollen, und welche konfiguriert ist, um einen Stromwert des Motorstroms (I), welcher in der Aufroll-Stromrichtung (D1) fließt, von einem ersten Stromwert (i1) auf einen zweiten Stromwert (i2) abzusenken, wobei der erste Stromwert (i1) erforderlich ist, um den Sitzgurt (2) aufzurollen, und wobei der zweite Stromwert (i2) erforderlich ist, um eine Spannung des Sitzgurts (2) zu halten,
wobei die Steuervorrichtung (1) eine Stromleitdauer (Tc) misst, während welcher der Motorstrom (I) in der Aufroll-Stromrichtung (D1) fließt, und wobei, wenn die Stromleitdauer (Tc) eine vorgegebene Zeit (T2) erreicht, die Steuervorrichtung (1) den Stromwert des Motorstroms (I), welcher in der Abroll-Stromrichtung (D1) fließt,
von dem zweiten Stromwert (i2) auf einen dritten Stromwert (i3, i31, i32) weiter absenkt, welcher erforderlich ist, um eine Spannung des Sitzgurts (2) zu halten.

2. Sitzgurt-Aufrollvorrichtung (16) nach Anspruch 1,
wobei die Steuervorrichtung (1) die Stromleitdauer (Tc) misst, während welcher der Motorstrom (I) in der Aufroll-Stromrichtung (D1) fließt, und wenn ein Abschluss eines Bremsvorgangs eines Fahrzeugs (13) in einer Zeit nicht erfasst wird, in welcher die Stromleiterdauer (Tc) die vorgegebene Zeit (T2) erreicht, die Steuervorrichtung (1) den Stromwert des Motorstroms (I), welcher in der Aufroll-Stromrichtung (D1) fließt, von dem zweiten Stromwert (i2) weiter absenkt.

3. Sitzgurt-Aufrollvorrichtung (16) nach Anspruch 1 oder 2, wobei die Steuervorrichtung (1) den Stromwert des Motorstroms (I), welcher in der Aufroll-Stromrichtung (D1) fließt, von dem zweiten Stromwert (i2) allmählich absenkt.

4. Sitzgurt-Aufrollvorrichtung (16) nach einem der Ansprüche 1 bis 3, wobei die Stromleitdauer (Tc) eine verstrichene Zeit von dem Zeitpunkt ist, zu welchem der Motorstrom (I) beginnt, in der Aufroll-Stromrichtung (D1) zu fließen.

5. Sitzgurt-Aufrollvorrichtung (16) nach Anspruch 4, wobei die Steuervorrichtung (1) eine Länge der vorgegebenen Zeit (T2) abhängig von einer Fahrzeuggeschwindigkeit zu einem Moment einstellt, zu welchem der Motorstrom (I) beginnt, in der Aufroll-Stromrichtung (D1) zu fließen.

6. Sitzgurt-Aufrollvorrichtung (16) nach einem der Ansprüche 1 bis 5, wobei die Steuervorrichtung (1) fortsetzt zu bewirken, dass der Motorstrom (I) in die Aufroll-Stromrichtung (D1) fließt, bis die Stromleitdauer (Tc) eine zweite vorgegebene Zeit (T3) erreicht, welche länger als die vorgegebene Zeit (T2) ist.

7. Sitzgurt-Aufrollvorrichtung (16) nach Anspruch 6, wobei die Steuervorrichtung (1) den Stromwert des Motorstroms (I), welcher in die Aufroll-Stromrichtung (D1) fließt, gleich oder kleiner als den zweiten Stromwert (i2) hält, bis die Stromleitdauer (Tc) die zweite vorgegebene Zeit (T3), welche länger als die vorgegebene Zeit (T2) ist, erreicht.

8. Sitzgurt-Aufrollvorrichtung (16) nach Anspruch 6 oder 7, wobei die Steuervorrichtung (1) bewirkt, dass der Motorstrom (I) in eine Stromrichtung (D2) entgegengesetzt zu der Aufroll-Stromrichtung (D1) fließt, wenn die Stromleitdauer (Tc) die zweite vorgegebene Zeit (T3) erreicht.

9. Sitzgurt-Aufrollvorrichtung (16) nach einem der Ansprüche 1 bis 5, wobei die Steuervorrichtung (1) fortsetzt zu bewirken, dass der Motorstrom (I) in die Aufroll-Stromrichtung (D1) fließt, bis ein Abschluss eines Bremsvorgangs des Fahrzeugs (13) erfasst wird.

10. Sitzgurt-Aufrollvorrichtung (16) nach einem der Ansprüche 1 bis 5, wobei die Steuervorrichtung (1) den Stromwert des Motorstroms (I), welcher in die Aufroll-Stromrichtung (D1) fließt, gleich oder kleiner als den zweiten Stromwert (i2) hält, bis ein Abschluss eines Bremsvorgangs des Fahrzeugs (13) erfasst wird.

11. Sitzgurt-Aufrollvorrichtung (16) nach Anspruch 9 oder 10, wobei die Steuervorrichtung (1) bewirkt, dass der Motorstrom (I) in einer Stromrichtung (D2) entgegengesetzt zu der Aufroll-Stromrichtung (D1) fließt, wenn der Abschluss des Bremsvorgangs erfasst wird.

12. Sitzgurtvorrichtung (100) umfassend:
die Sitzgurt-Aufrollvorrichtung (16) nach einem der Ansprüche 1 bis 11;
den Sitzgurt (2);
ein Führungsteil, welches konfiguriert ist, um den Sitzgurt (2) zu führen;
eine Zunge (4), an welcher der Sitzgurt (2) angebracht ist; und
ein Gurtschloss (5), an welchem die Zunge (4) anbringbar und von welchem sie lösbar ist.

## Revendications

1. Appareil d'enroulement de ceinture de sécurité (16) comprenant :
un moteur (7) ; et
un dispositif de commande (1) configuré pour générer un flux de courant de moteur (I) dans une direction de courant d'enroulement (D1) qui entraîne le moteur (7) afin de générer une force destinée à enrouler une ceinture de sécurité (2), et configuré pour réduire une valeur de courant du courant de moteur (I) qui circule dans la direction de courant d'enroulement (D1) en la faisant passer d'une première valeur de courant (il) à une seconde valeur de courant (i2), la première valeur de courant (il) étant nécessaire pour enrouler la ceinture de sécurité (2) et la seconde valeur de courant (i2) étant nécessaire pour maintenir la tension de la ceinture de sécurité (2),
dans lequel le dispositif de commande (1) mesure une durée de conduction de courant (Tc) pendant laquelle le courant de moteur (I) circule dans la direction de courant d'enroulement (D1), et, lorsque la durée de conduction de courant (Tc) atteint une durée définie (T2), le dispositif de commande (1) réduit à nouveau la valeur de courant du courant de moteur (I) qui circule dans la direction de courant d'enroulement (D1) en la faisant passer de la seconde valeur de courant (i2) à une troisième valeur de courant (i3, i31, i32) qui est nécessaire pour maintenir la tension de la ceinture de sécurité (2).

2. Appareil d'enroulement de ceinture de sécurité (16) selon la revendication 1,
dans lequel le dispositif de commande (1) mesure la durée de conduction de courant (Tc) pendant laquelle le courant de moteur (I) circule dans la direction de courant d'enroulement (D1), et, en cas de non-détection d'une action de freinage d'un véhicule (13) à un moment auquel la durée de conduction de courant (Tc) atteint la durée définie (T2), le dispositif de commande (1) réduit à nouveau la valeur de courant du courant de moteur (1) qui circule dans la direction de courant d'enroulement (D1) par rapport à la seconde valeur de courant (i2).

3. Appareil d'enroulement de ceinture de sécurité (16) selon la revendication 1 ou 2, dans lequel le dispositif de commande (1) diminue progressivement la valeur de courant du courant de moteur (1) qui circule dans la direction de courant d'enroulement (D1) par rapport à la seconde valeur de courant (i2).

4. Appareil d'enroulement de ceinture de sécurité (16) selon l'une quelconque des revendications 1 à 3, dans lequel la durée de conduction de courant (Tc) est une durée écoulée à compter du moment où le courant de moteur (I) commence à circuler dans la direction de courant d'enroulement (D1).

5. Appareil d'enroulement de ceinture de sécurité (16) selon la revendication 4, dans lequel le dispositif de commande (1) ajuste une longueur de la durée définie (T2) selon la vitesse du véhicule à un moment auquel le courant de moteur (I) commence à circuler dans la direction de courant d'enroulement (D1).

6. Appareil d'enroulement de ceinture de sécurité (16) selon l'une quelconque des revendications 1 à 5, dans lequel le dispositif de commande (1) continue à faire circuler le courant de moteur (I) dans la direction de courant d'enroulement (D1) jusqu'à ce que la durée de conduction de courant (Tc) atteigne une seconde durée définie (T3), qui est plus longue que la durée définie (T2).

7. Appareil d'enroulement de ceinture de sécurité (16) selon la revendication 6, dans lequel le dispositif de commande (1) maintient la valeur de courant du courant de moteur (1) qui circule dans la direction de courant d'enroulement (D1) égale ou inférieure à la seconde valeur de courant (i2) jusqu'à ce que la durée de conduction de courant (Tc) atteigne la seconde durée définie (T3), qui est plus longue que la durée définie (T2).

8. Appareil d'enroulement de ceinture de sécurité (16) selon la revendication 6 ou 7, dans lequel le dispositif de commande (1) provoque une circulation du courant de moteur (I) dans une direction de courant (D2) opposée à la direction de courant d'enroulement (D1), lorsque la durée de conduction de courant (Tc) atteint la seconde durée définie (T3).

9. Appareil d'enroulement de ceinture de sécurité (16) selon l'une quelconque des revendications 1 à 5, dans lequel le dispositif de commande (1) continue à faire circuler le courant de moteur (I) dans la direction de courant d'enroulement (D1) jusqu'à détecter la fin d'une action de freinage du véhicule (13).

10. Appareil d'enroulement de ceinture de sécurité (16) selon l'une quelconque des revendications 1 à 5, dans lequel le dispositif de commande (1) maintient la valeur de courant du courant de moteur (I) qui circule dans la direction de courant d'enroulement (D1) égale ou inférieure à la seconde valeur de courant (i2) jusqu'à détecter une action de freinage du véhicule (13).

11. Appareil d'enroulement de ceinture de sécurité (16) selon la revendication 9 ou 10, dans lequel le dispositif de commande (1) provoque la circulation du courant de moteur (I) dans une direction de courant (D2) opposée à la direction de courant d'enroulement (D1), lors de la détection de l'action de freinage.

12. Appareil de ceinture de sécurité (100) comprenant :
l'appareil d'enroulement de ceinture de sécurité (16) selon l'une quelconque des revendications 1 à 11 ;
la ceinture de sécurité (2) ;
un élément de guidage configuré pour guider la ceinture de sécurité (2) ;
un ardillon (4) sur lequel la ceinture de sécurité (2) est fixée ; et
une boucle (5) sur laquelle l'ardillon (4) peut être fixé ou détaché.
